# EUROPEAN PATENT APPLICATION

(11) **EP 1 768 395 A2**
(43) Date of publication of application: **28.03.2007**
(21) Application number: 06018802.6
(22) Date of filing: 07.09.2006
(51) Int. Cl.: H04N 5/445

(54) **Television receiver and channel presetting method for television receiver**

(30) Priority: 21.09.2005 JP 2005273491
(71) Applicant: Orion Electric Company, LTD., Echizen-shi, Fukui-ken (JP)
(72) Inventor: Uno, Toshihiro, Echizen-shi Fukui-ken (JP); Yamauchi, Yoshinobu, Echizen-shi Fukui-ken (JP); Matsumara, Toshiaki, Echizen-shi Fukui-ken (JP)
(74) Representative: Kirschner, Klaus Dieter

(57) **Abstract**

A broadcasting timetable is newly created at one step. If a broadcasting state of a channel is changed at certain times' intervals in this broadcasting timetable, a processing goes to a next step. At the next step, the broadcasting state of each channel is judged at a time at which the broadcasting state is changed, and a judgment result is temporarily stored. At a next step, a content stored in the broadcasting timetable is compared with the judged broadcasting state to determine whether they are coincident. If they are coincident, a processing goes to a next step; otherwise, the broadcasting timetable is updated.

## Description

The present invention relates to a television receiver and a channel presetting method for the television receiver.

Recently, the number of channels has rapidly increased for television broadcasting. This makes it difficult to directly designate one of channels using corresponding one of number keys (which are normally about 12 to 15 number keys provided on a remote controller) and on each of which a channel number is described. Channel switching using "UP key" and "DOWN key" has been performed more frequently.

Meanwhile, for the television broadcasting, all channels are not necessarily broadcast from morning till night. In a certain time zone (e.g., at midnight or in early morning), broadcasting of many channels is suspended. Normally, search and storage (presetting) of receivable channels are performed once when a user purchases a television receiver. Subsequently, all channels thus preset are sequentially selected and displayed using the UP key and the DOWN key. For this reason, even if broadcasting of a certain channel is suspended, the channel is selected and displayed. This disadvantageously provides poor user-friendliness to the television receiver during channel switching.

To solve this disadvantage, there is known a method using a technique disclosed in Japanese Patent Application Laid-Open No. 2000-332633. According to this document, a channel search is done at predetermined time intervals, and information on channels which are judged to be receivable is stored in a memory. If this technique is used, channels the broadcasting of which is suspended can be excluded from switching target channels using the "UP key" and "DOWN key".

However, the conventional television receiver and the conventional channel presetting method are confronted with the following disadvantages. Broadcasting of many channels is suspended from midnight till early morning. Due to this, if the channel search is conducted at predetermined time intervals as disclosed in Japanese Patent Application Laid-Open No. 2000-332633, the channel search is done even in a time zone in which many channels are broadcast, resulting in unnecessary power consumption. Moreover, if the channel search is conducted at wide time intervals to reduce power consumption, such disadvantages as exclusion of channels on the air and failure to exclude channels off the air tend to occur. Namely, accuracy for estimating a broadcasting state of each channel as to whether the channel is broadcast is deteriorated.

Therefore, a technique for maintaining high accuracy for estimating the broadcasting state of each channel, decreasing the number of times of search, and reducing power consumption is desired.

It is an object of the present invention to provide a television receiver and a channel presetting method for the television receiver that can maintain high accuracy for estimating a broadcasting state of each channel, decrease the number of times of search, reduce power consumption of the television receiver, and control a channel the broadcasting of which is suspended not to be displayed during channel switching.

According to a first aspect of the present invention, there is provided a television receiver comprising: a tuner that selectively receives a signal on a designated channel; a demodulator that demodulates the selectively received signal; a controller that controls the tuner and the demodulator; and an operation unit that converts an input channel switching operation into a control signal, and that transmits the control signal to the controller, wherein the controller includes: judging means for judging whether the designated channel is being broadcast at a preset time using an output signal from the demodulator; and storing means for storing a result of judging whether the designated channel is being broadcast, and if the storing means stores the result for each channel that the channel is being broadcast at a present time, the channel is set to be able to be displayed, if the storing means stores the result that the channel is not being broadcast, the channel is set to be unable to be displayed, and judgment by the judging means and storage by the storing means are executed in a time zone in which no program is being broadcast or at a time near the time zone.

In the television receiver according to the first aspect of the present invention, a channel search is conducted in or near a time zone in which a broadcasting state (a state representing whether each channel is being broadcast) is changed, and the channel search is not conducted in or near a time zone in which the broadcasting state is not changed. It is, therefore, possible to provide the television receiver that can maintain high accuracy for estimating the broadcasting state of each channel, decrease the number of times of search, reduce power consumption, and control a channel the broadcasting of which is suspended not to be displayed during channel switching.

According to a second aspect of the present invention, there is provided a channel presetting method for a television receiver, the television receiver comprising: a tuner that selectively receives a signal on a designated channel; a demodulator that demodulates the selectively received signal; a controller that controls the tuner and the demodulator; and an operation unit that converts an input channel switching operation into a control signal, and that transmits the control signal to the controller, the channel presetting method comprising: a first step of causing the controller to judge whether the designated channel is being broadcast at a preset time using an output signal from the demodulator; and a second step of causing the controller to store a result of judging whether the designated channel is being broadcast, wherein if the result stored at the second step for each channel is that the channel is being broadcast at a present time, the controller controls the channel to be able to be displayed, and if the result stored at the second step for each channel is that the channel is not being broadcast at the present time, the controller controls the channel to be unable to be displayed, and the first step and the second step are executed in a time zone in which the channel is not being broadcast or at a time near the time zone.

In the channel presetting method for the television receiver according to the second aspect of the present invention, a channel search is conducted in or near a time zone in which a broadcasting state (a state representing whether each channel is being broadcast) is changed, and the channel search is not conducted in or near a time zone in which the broadcasting state is not changed. It is, therefore, possible to provide the channel presetting method for the television receiver that can maintain high accuracy for estimating the broadcasting state of each channel, decrease the number of times of search, reduce power consumption, and control a channel the broadcasting of which is suspended not to be displayed during channel switching.

The present invention can provide the channel presetting method for the television receiver that can maintain the high accuracy for estimating the broadcasting state of each channel, that can decrease the number of times of search, that can reduce power consumption, and that does not display the channels the broadcasting of which is suspended during channel switching by optimizing the time for checking the broadcasting state of each channel.

An embodiment of the present invention will be described hereinafter with reference to the accompanying drawings.
Fig. 1 is a block diagram of a television receiver according to an embodiment of the present invention;
Fig. 2 is a flowchart of a processing performed by the television receiver shown in Fig. 1; and
Fig. 3 is an explanatory view of a broadcasting timetable according to the embodiment.

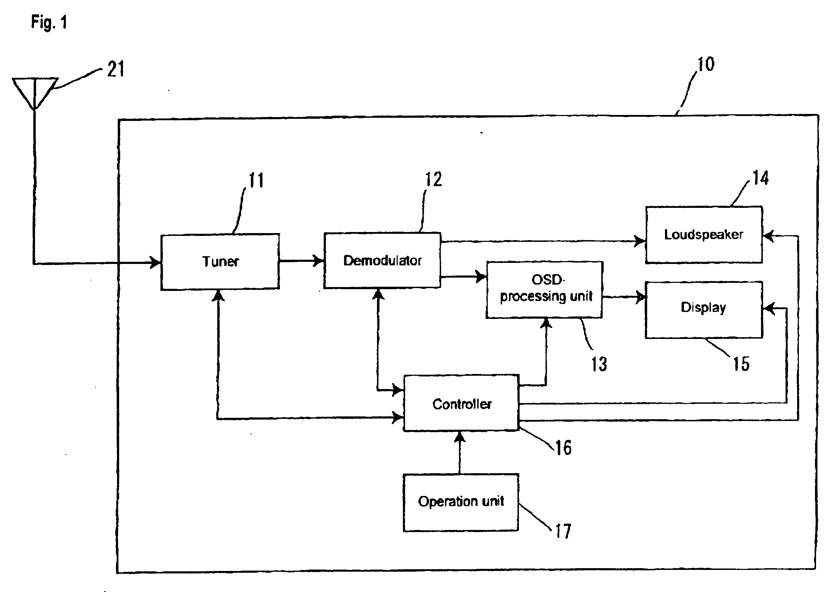

Fig. 1 is a bock diagram of a television receiver 10 according to the embodiment of the present invention. This television receiver 10 includes a tuner 11, a demodulator 12, an OSD processing unit 13, a loudspeaker 14, a display 15, a controller 16, and an operation unit 17. The tuner 11 selectively receives a signal on a designated channel. The demodulator 12 demodulates the selectively received signal. The OSD processing unit 13 performs an on-screen display (OSD) processing on a video signal. The loudspeaker 14 outputs a voice signal. The display 15 displays the video signal. The controller 16 controls the tuner 11, the demodulator 12, the OSD processing unit 13, the loudspeaker 14, and the display 15. The operation unit 17 converts an input channel switching operation into a control signal, and transmits this control signal to the controller 16.

Specifically, the tuner 11 selectively receives the signal on the designated channel from signals input from an antenna 21. The demodulator 12 demodulates the selectively received signal and outputs the voice signal and the video signal. The loudspeaker 14 converts the voice signal into a voice and outputs the voice. The OSD processing unit 13 performs the OSD processing on the video signal (or does not perform the OSD processing thereon if an OSD function is not employed). The display 15 displays the video signal processed by the OSD processing unit 13 as a video. The controller 16 controls the tuner 11, the demodulator 12, the OSD processing unit 13, the loudspeaker 14, and the display 15. The operation unit 17 converts the input channel switching operation into the control signal, and transmits this control signal to the controller 16.

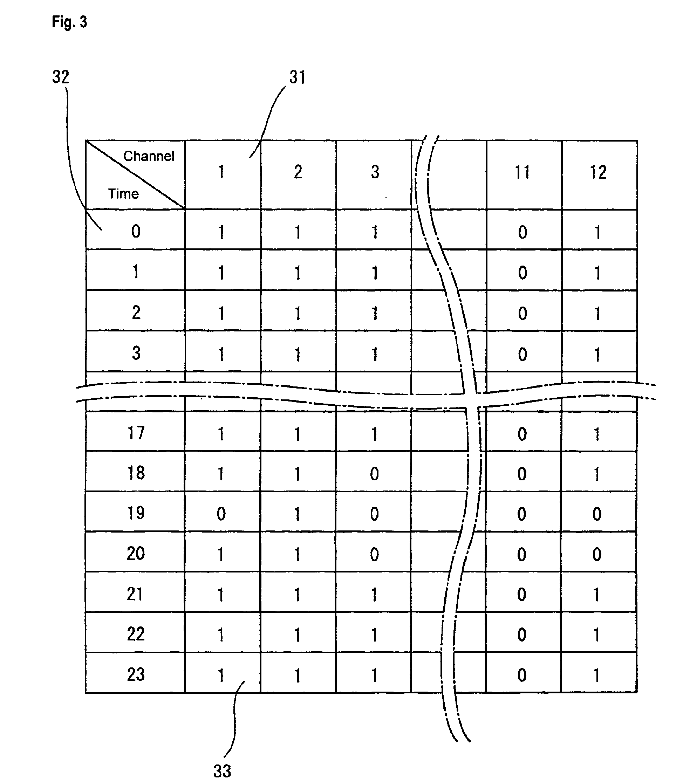

Fig. 3 is a table ("broadcasting timetable") in which broadcasting states of a plurality of channels are stored at one-hour intervals. The broadcasting timetable is stored in the controller 16. Numbers denoted by reference symbol 31 in a horizontal direction represent channel numbers, respectively (which numbers are 1 to 12 for the sake of convenience; however, the present invention is not limited thereto). Numbers denoted by reference symbol 32 in a vertical direction represent time (note that Fig. 3 depicts 24 rows which correspond to one day). The time is not necessarily absolute time but may be set so that a time at which the television receiver is turned on first after purchase or a time at which a channel setting is made first is reset to zero (namely, if the television receiver is turned on for the first time at eight o'clock in the morning and this time is set as time zero in the broadcasting timetable, time 19 in the broadcasting timetable corresponds to three o'clock in the morning according to actual time). In the broadcasting timetable, numbers denoted by reference symbol 33 except for the channel numbers 31 and the time 32 represent broadcasting states, respectively. Specifically, "1" represents a state in which a channel is being broadcast, and "0" represents a state in which the channel is not being broadcast. Accordingly, for a channel identified by channel number 1, broadcasting of the channel is suspended when a broadcasting state is checked at time 19 and the channel is broadcast at all time except for the time 19. An example of a channel that is broadcast 24 hours is a channel identified by channel 2, and an example of a channel that is not broadcast at all is a channel identified by channel 11.

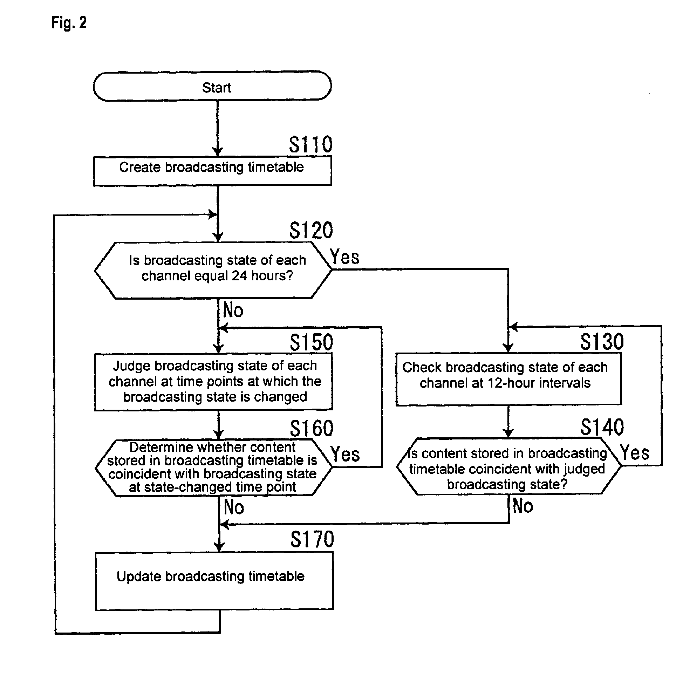

A channel presetting method for the television receiver 10 thus configured will next be described with reference to the flowchart of Fig. 2.

When the television receiver 10 is turned on for the first time after purchase, the controller 16 starts the flowchart shown in Fig. 2. A processing shown in this flowchart is performed mainly by the controller 16 (that is, the controller 16 is responsible for all operations and processings at conditional branches for a next step). First, at step S110, the controller 16 creates the broadcasting timetable shown in Fig. 3. Specifically, the controller 16 judges broadcasting states of all channels at one-hour intervals, and stores a judgment result in storing means (not shown) provided in the controller 16. The judgment of the broadcasting state is made by counting the number of vertical synchronization signals or horizontal synchronization signals in video signals on each channel. If the count is greater than a threshold, the controller 16 judges that the channel is being broadcast; otherwise, the controller 16 judges that the broadcasting of the channel is suspended. It takes one day for the controller 16 to perform this processing. Upon completion of this processing, the controller 16 goes to step S120.

At step S120, the controller 16 determines whether the broadcasting state of each channel is equal 24 hours (that is, 24 broadcasting states in the respective columns are all equal). This is intended to determine whether each channel is in a state in which the channel is broadcast 24 hours or in which the channel is not broadcast at all. If it is determined that the broadcasting state of each channel is equal 24 hours, the controller 16 goes to step S130; otherwise, the controller 16 goes to step S150.

At step S130, the controller 16 actually judges the broadcasting state of each channel twice at 12-hour intervals, and temporarily stores the broadcasting state in the storing means. It takes one day for the controller 16 to perform this judgment processing. Upon completion of this processing, the controller 16 goes to step S140. At step S140, the controller 16 compares a content of the timetable with the broadcasting state judged at step S130 to determine whether they are coincident. If they are coincident, the controller 16 goes to step S130; otherwise, the controller 16 goes to step S170.

At step S150, the controller 16 judges the broadcasting state of each channel in rows of time (corresponding to time 18, 19, 20, and 21 in Fig. 3) at which the broadcasting state is changed in the timetable, and temporarily stores the broadcasting states in the storing means. It takes one day for the controller 16 to perform this judgment processing. Upon completion of this processing, the controller 16 goes to step S160. At step S160, the controller 16 compares the stored content of the broadcasting table with the broadcasting state judged at step S150 to determine whether they are coincident. If it is determined that they are coincident, the controller 16 goes to step S150; otherwise, the controller 16 goes to step S170.

At step S170, the controller 16 updates the broadcasting timetable. Specifically, the controller 16 judges broadcasting states of all the channels at one-hour intervals and stores the judged broadcasting states in the storing means. It takes one day for the controller 16 to perform this processing. Upon completion of this processing, the controller 16 returns to step S120.

When a user of the television receiver switches one channel to another channel using the "UP key" or "DOWN key", the controller 16 controls the channel so that the channel the broadcasting state of which is "1" in the row corresponding to the time of switching in the broadcasting timetable is displayed, and the channel the broadcasting state of which is "0" in the same row is not displayed.

In this way, the time at which the controller 16 performs the judgment processing can be narrowed down to a time zone in which the broadcasting state of each channel is changed. Namely, the controller 16 can perform the judgment processing in the time zone from midnight till early morning in which many channels are not broadcast, and does not perform the judgment processing at daytime at which many channels are broadcast. It is, therefore, possible to maintain high accuracy for estimating the broadcasting state of each channel, decrease the number of times of search, and reduce power consumption.

As stated so far, the present invention can provide the channel presetting method for the television receiver that can maintain the high accuracy for estimating the broadcasting state of each channel, that can decrease the number of times of search, that can reduce power consumption, and that does not display the channel the broadcasting of which is suspended during channel switching by optimizing the time for checking the broadcasting state of each channel.

In the embodiment, the broadcasting state of each channel is stored at one-hour intervals. However, the time intervals are not limited to the one-hour intervals but may be, for example, 30-minute intervals. Furthermore, broadcasting states for one day are stored in the broadcasting timetable in the embodiment. Alternatively, broadcasting states may be judged at wider intervals (e.g., one-week intervals). Moreover, the judgment of the broadcasting state of each channel is made by counting the number of vertical synchronization signals or horizontal synchronization signals in the embodiment. Alternatively, the judgment may be made using television program information (an electronic timetable) transmitted together with a broadcasting wave.

## Claims

1. A television receiver comprising:
a tuner that selectively receives a signal on a designated channel;
a demodulator that demodulates the selectively received signal;
a controller that controls the tuner and the demodulator; and
an operation unit that converts an input channel switching operation into a control signal, and that transmits the control signal to the controller, wherein
the controller includes:
judging means for judging whether the designated channel is being broadcast at a preset time using an output signal from the demodulator; and
storing means for storing a result of judging whether the designated channel is being broadcast, and
if the storing means stores the result for each channel that the channel is being broadcast at a present time, the channel is set to be able to be displayed, if the storing means stores the result that the channel is not being broadcast, the channel is set to be unable to be displayed, and judgment by the judging means and storage by the storing means are executed in a time zone in which no program is being broadcast or at a time near the time zone.

2. A channel presetting method for a television receiver, the television receiver comprising:
a tuner that selectively receives a signal on a designated channel;
a demodulator that demodulates the selectively received signal;
a controller that controls the tuner and the demodulator; and
an operation unit that converts an input channel switching operation into a control signal, and that transmits the control signal to the controller, the channel presetting method comprising:
a first step of causing the controller to judge whether the designated channel is being broadcast at a preset time using an output signal from the demodulator; and
a second step of causing the controller to store a result of judging whether the designated channel is being broadcast, wherein
if the result stored at the second step for each channel is that the channel is being broadcast at a present time, the controller controls the channel to be able to be displayed, and if the result stored at the second step for each channel is that the channel is not being broadcast at the present time, the controller controls the channel to be unable to be displayed, and
the first step and the second step are executed in a time zone in which the channel is not being broadcast or at a time near the time zone.
